Europäisches Patentamt

European Patent Office

Office européen des brevets

(19)

(11) Veröffentlichungsnummer: **0 004 343**
**B1**

(12) **EUROPÄISCHE PATENTSCHRIFT**

(45) Veröffentlichungstag der Patentschrift: **01.04.81**

(21) Anmeldenummer: **79100781.8**

(22) Anmeldetag: **15.03.79**

(51) Int. Cl.³: **C 08 G 63/22,**
**C 08 G 63/16, C 08 G 63/18**

(54) Verfahren zur Herstellung von linearen hochmolekularen gesättigten Polyestern.

(30) Priorität: **25.03.78 DE 2813161**

(43) Veröffentlichungstag der Anmeldung:
**03.10.79 Patentblatt 79/20**

(45) Bekanntmachung des Hinweises auf die Patenterteilung:
**01.04.81 Patentblatt 81/13**

(84) Benannte Vertragsstaaten:
**BE CH DE FR GB IT NL**

(56) Entgegenhaltungen:
**DE - A - 2 213 259**
**DE - A - 2 359 260**
**DE - B - 1 301 551**
**US - A - 3 446 772**

(73) Patentinhaber: **BASF Aktiengesellschaft**
**Carl-Bosch-Strasse 38**
**D-6700 Ludwigshafen (DE)**

(72) Erfinder: **Sterzel, Hans-Josef, Dr.**
**Haardtstrasse 13**
**D-6701 Dannstadt-Schauernheim 1 (DE)**
Erfinder: **Schmidt, Franz, Dr.**
**Trommstrasse 3**
**D-6800 Mannheim 1 (DE)**
Erfinder: **Pirzer, Hans, Dr.**
**Wildstrasse 22**
**D-6710 Frankenthal (DE)**

Courier Press, Leamington Spa, England.

# 0 004 343

Verfahren zur Herstellung von linearen hochmolekularen gesättigten Polyestern

Bei der Herstellung von hochmolekularen linearen gesättigten Polyestern werden niedrig molekulare Vorkondensate mit niedriger Viskosität bei Temperaturen von 260 bis 300°C unter vermindertem Druck unter Abspaltung von Diolen in hochmolekulare Kondensate übergeführt. Bei den hohen erforderlichen Temperaturen sind Polyesterschmelzen jedoch instabil, was sich in einem erhöhten Carboxylendgruppengehalt auswirkt. Bei dem aus der DE—AS 1 745 541 bekannten Verfahren wird das Polyestervorkondensat durch eine horizontale Zone, die in Unterzonen unterteilt ist, geleitet, wobei in jeder Unterzone die Schmelze in einem dünnen Film geformt wird. Das Verfahren hat den Nachteil, daß es erheblich Zeit, z.B. mehrere Stunden in Anspruch nimmt, und somit die thermische Stabilität des erhaltenen Polyesters beeinträchtigt wird. Dies gilt insbesondere dann, wenn als Diolkomponente Butandiol-1,4 mitverwendet wird, da durch die zusätzliche Tetrahydrofuranbildung die Carbonxylendgruppenbildung begünstigt wird.

Es war deshalb die technische Aufgabe gestellt, die Polykondensation von Polyestervorkondensaten so zu gestalten, daß sie, bezogen auf die jeweils angewandte verfahrenstechnische Kondensationsmethode in kürzerer Zeit verläuft und ein Polyester mit erhöhter thermischer Stabilität erhalten wird.

Diese Aufgabe wird gelöst in einem Verfahren zur Herstellung von hochmolekularen, linearen, gesättigten Polyestern, die sich von Dicarbonsäuren oder deren Ester bildenden Derivaten und aliphatischen und/oder cycloaliphatischen Diolen ableiten, durch Kondensation von Polyestervorkondensaten mit einer relativen Viskosität von 1,05 bis 1,15 bei Temperaturen von 220 bis 280°C unter vermindertem Druck, wobei man

a) zunächst mit einer Teilmenge von 70 bis 95 Gew.% des Polyestervorkondensats die Kondensation beginnt und

b) nach Ablauf von 10 bis 50% der Gesamtkondensationsdauer der gemäß a) kondensierenden Polyesterschmelze, die restlichen 5 bis 30 Gew.% des Polyestervorkondensats zu der kondensierenden Polyesterschmelze zugibt und zu Ende kondensiert.

Das neue Verfahren hat den Vorteil, daß es, bezogen auf die jeweils angewandte Verfahrenstechnick, in kürzerer Zeit als bisher verläuft. Darüber hinaus hat das neue Verfahren den Vorteil, daß man Polyesterschmelzen erhält, die eine erhöhte thermische Stabilität aufweisen. Darüber hinaus hat das neue Verfahren den Vorteil, daß bestehende Verfahren durch einfache Modifikation wirkungsvoller gestaltet werden können.

Die erfindungsgemäß erzielten Ergebnisse sind insofern überraschend, als davon auszugehen war, daß für die später zugesetzte Teilmenge an Vorkondensat die nunmehr hierfür verkürzte Kondensationsdauer nicht ausreichen würde, um hochmolekulare Polyester zu erhalten.

Die hochmolekularen linearen gesättigten Polyester leiten sich ebenso wie die Polyestervorkondensate ab von Dicarbonsäuren oder deren Ester bildenden Derivaten, wie Alkylestern. Bevorzugt sind aliphatische und/oder aromatische Dicarbonsäuren mit einem Molekulargewicht kleiner als 390. Besonders bevorzugte Dicarbonsäuren haben außer den Carboxylgruppen Kohlenwasserstoffstruktur. Besondere technische Bedeutung haben Alkandicarbonsäuren mit 5 bis 10 Kohlenstoffatomen oder Benzol- oder Naphthalindicarbonsäuren, insbesondere solche, die sich von Benzol ableiten, erlangt. Insbesondere ist Terephthalsäure hervorzuheben. Geeignete Ausgangsstoffe sind beispielsweise Glutarsäure, Bernsteinsäure, Naphthalin-2,6-dicarbonsäure, 4,4′-Diphenyldicarbonsäure, 4,4′-Diphenoxydicarbonsäure, Terephthalsäure oder Isophthalsäure oder $C_1$- bis $C_4$-Alkylester, insbesondere Methylester der genannten Säuren.

Bevorzugte Diole sind aliphatische und/oder cycloaliphatische Diole mit einem Molekulargewicht kleiner als 280. Sie haben vorzugsweise, abgesehen von den Hydroxylgruppen, Kohlenwasserstoffstruktur. Besondere technische Bedeutung haben Alkandiole, insbesondere solche mit 2 bis 6 Kohlenstoffatomen, erlangt. Geeignete Diole sind beispielsweise Äthylenglykol-, Propylenglykol-, Butandiol-1,4, Hexandiol-1,6 oder 1,4-bis-Hydroxymethylcyclohexan. Besondere technische Bedeutung haben Äthylenglykol und Butandiol-1,4 erlangt.

Technisch besonders bevorzugte Polyester und auch deren Vorkondensate bestehen im wesentlichen aus Polyäthylen- und Polybutylenterephthalateinheiten. Besonders bewährt hat sich das Verfahren zur Herstellung von Polyestern, die mindestens zu 50 mol% aus Polybutylenterephthalat, vorzugsweise 70 bis 100 Molprozent aus Polybutylenterephthalateinheiten bestehen.

Die Polyestervorkondensate erhält man in an sich bekannter Weise z.B. durch Umsetzen von Dicarbonsäuren oder deren Estern mit einem Diol in Gegenwart von Katalysatoren, wie Titansäureestern, Antimon, Mangan oder Zinkverbindungen, z.B. deren fettsauren Salze, bei Temperaturen von 150 bis 260°C. Die so erhaltenen Diglykolester von Carbonsäuren werden dann unter vermindertem Druck, z.B. 0,67—6,67 kPa (5 bis 50 Torr), bei Temperaturen von 220 bis 270°C vorkondensiert. Solche Vorkondensate haben eine relative Viskosität von 1,05 bis 1,15 (gemessen als 0,5 gewichtsprozentige Lösung in einem Gemisch aus Phenol und Orthodichlorbenzol im Gewichtsverhältnis 3:2 bei 25°C). Die Herstellung solcher Vorkondensate wird beispielsweise beschrieben in der DE—OS 25 14 116.

Die Kondensation der Polyestervorkondensate zu hochmolekularen Polyestern wird bei Temperaturen von 220 bis 280°C unter vermindertem Druck durchgeführt. Vorteilhaft hält man Drücke von

2

13—267 Pa (0,1 bis 2 Torr) ein. Die angewandte Temperatur richtet sich auch nich dem Schmelzpunkt der zu erzeugenden Polyester, d.h. die Temperatur soll mindestens 10°C über dem Schmelzpunkt des jeweils herzustellen Polyesters liegen. Es versteht sich, daß die bei der Kondensation abspaltenden Diole fortlaufend aus dem Reaktionsgemisch entfernt werden.

Erfindungsgemäß verfährt man so, daß man a) zunächst mit einer Teilmenge von 70 bis 95 Gew.% insbesondere 75 bis 90 Gew.% des Polyestervorkondensats die Kondensation unter den vorgenannten Bedingungen beginnt und b) nach Ablauf von 10 bis 50%, insbensondere 20 bis 35% der Gesamtkondensationsdauer der gemäß a) kondensierenden Polyesterschmelze die restlichen 5 bis 30 Gew.% des Polyestervorkondensats zu der kondensierenden Polyesterschmelze zugibt. Vorteilhaft hat die kondensierende Polyesterschmelze gemäß a) zum Zeitpunkt der Zugabe des restlichen Teils an Polyestervorkondensats eine relative Viskosität von 1,25 bis 1,53. Es versteht sich, daß die gemäß b) zugegebene restliche Polyestervorkondensatmenge mit der kondensierenden Polyesterschmelze innig vermischt wird.

Das erfindungsgemäße Verfahren läßt sich demzufolge auf einfache Weise diskontinuierlich durchführen, indem man zunächst die angegebene größere Teilmenge zu den agengebenen Bedingungen kondensiert wird und nach Ablauf von 10 bis 50% der Gesamtkondensationszeit die restliche Teilmenge unter gutem Vermischen zugibt und das Gemisch auskondensiert. Das Verfahren läßt sich ohne weitere Schwierigkeit auch kontinuierlich in geeigneten Vorrichtungen durchführen. Hierbei wird die größere Teilmenge zunächst kontinuierlich unter den angegebenen Bedingungen kondensiert und an der Stelle der Kondensationszone, z.B. im zweiten Viertel einer horizontal angeordneten Kondensationszone die restlichen 5 bis 30 Gew.% des Polyestervorkondensats zugegeben, wobei die zugegebene Menge mit der kondensierenden Polyesterschmelze innig vermischt wird und dann das zu erhaltende Gemisch über die restliche Kondensationszeit, die verbleibt, zu einem hochmolekularen Polyester auskondensiert wird.

Polyester, die nach dem Verfahren der Erfindung erhältlich sind, eignen sich zur Herstellung von geformten Gebilden, wie Fäden, Folien spritzgegossenen oder extrudierten Teilen, ferner für Überzüge.

Das Verfahren nach der Erfindung sei in folgenden Beispielen veranschaulicht.

Beispiele

1. Herstellung von Polybutylenterephthalat-Vorkondensat

In einem Rührkessel von 500 l Inhalt, ausgestattet mit Rührer, Stickstoffeinleitung und Dephlegmator, werden Dimethylterephthalat und Butandiol-1,4 im Molverhältnis von 1:1,5 unter Zugabe von 0,15% Tetrabutylorthotitanat, bezogen auf die Menge Dimethylterephthalat, im Temperaturbereich von 130 bis 220°C unter Methanolabspaltung umgeestert.

Innerhalb von 50 min wird dann die Temperatur auf 250°C gesteigert und dabei der Druck kontinuierlich auf ca. 1,33 kPa (10 Torr) abgesenkt, wobei Butandiol-1,4 abdestilliert.

Man erhält ein Polybutylenterephthalat-Vorkondensat mit einer relativen Viskosität von 1,13.

Das Vorkondensat wird in einen auf 250°C geheizten Kondensationskessel von 500 l Inhalt gedrückt, der mit einem speziell für hochviskose Schmelzen ausgelegten Rührorgan ausgestattet war.

Nach den in nachfolgender Tabelle angegebenen Verfahrensbedingungen wird bei einem Druck von 67 Pa (0,5 Torr) und der Temperatur von 250°C die Kondensation zum hochmolekularen Polyester durchgeführt.

Zu den angegebenen Zeiten wurden die aufgeführten Mengen an Vorkondensat, welches in einem vorhergehenden Ansatz hergestellt worden war, zu der kondensierenden Schmelze gegeben.

Aus der Tabelle ist ersichtlich, daß das nach dem erfindungsgemäßen Verfahren hergestellte Polybutylenterephthalat nach kürzeren Gesamtkondensationszeiten höhere Viskositäten aufweist.

Zusätzlich wird eine erhöhte thermische Stabilität erhalten, da die relative Viskosität des Polyesters während des Entleerens des Kondensationskessels innerhalb einer Stunde weniger stark abnimmt als bei dem Vergleichsansatz I nach dem Stand der Technik.

# 0 004 343

## Tabelle

| Ansatz | 1 Vergleichsbeispiel | 2 | 3 | 4 |
|---|---|---|---|---|
| Masse an Vorkondensat zu Beginn der Kondensation | 200 kg (100%) | 180 kg (90%) | 170 kg (85%) | 160 kg (80%) |
| Kondensation t min<br>t | — | 40 min | 30 min | 36 min |
| % der Gesamtkondensationszeit | — | 39% | 28% | 32% |
| Zusatz von kg Vorkondensat<br>a | — | 20 kg | 30 kg | 40 kg |
| % der Gesamtansatzmenge | — | 10% | 15% | 20% |
| Gesamtkondensationszeit<br>min | 120 min | 103 min | 107 min | 110 min |
| Relative Viskosität am Ende der Kondensation | 1,67 | 1,77 | 1,82 | 1,74 |
| Relative Viskosität nach 1 Stunde Austragszeit | 1,59 | 1,72 | 1,75 | 1,705 |

Bei einer erfindungsgemäß modifizierten kontinuierlichen Arbeitsweise erhält man gleichfalls verbesserte Ergebnisse gegenüber einer nicht modifizierten Arbeitsweise.

## Patentansprüche

1. Verfahren zur Herstellung von hochmolekularen linearen gesättigten Polyestern, die sich von Dicarbonsäuren oder deren esterbildenden Derivaten und aliphatischen und/oder cycloaliphatischen Diolen ableiten, durch Kondensation von Polyestervorkondensaten einer relativen Viskosität von 1,05 bis 1,15 bei Temperaturen von 220 bis 280°C unter vermindertem Druck, wobei man Polyesterschmelzen unterschiedlichen Kondensationsgrades mischt, dadurch gekennzeichnet, daß man

a) zunächst mit einer Teilmenge von 70 bis 95 Gewichtsprozent des Polyestervorkondensats die Kondensation beginnt und

b) nach Ablauf von 10 bis 50% der Gesamtkondensationsdauer der gemäß a) kondensierenden Polyesterschmelze die restlichen 5 bis 30 Gewichtsprozent des Polyestervorkondensats zu der kondensierenden Polyesterschmelze zugibt und zu Ende kondensiert.

2. Verfahren nach Anspruch 1, dadurch gekennzeichnet, daß die kondensierende Polyesterschmelze zum Zeitpunkt der Zugabe des restlichen Teils an Polyestervorkondensat eine relative Viskosität von 1,25 bis 1,53 aufweist.

3. Verfahren nach den Ansprüchen 1 und 2, dadurch gekennzeichnet, daß man nach Ablauf von 20 bis 35% der Gesamtkondensationsdauer die restliche Menge des Polyestervorkondensats zugibt.

4. Verfahren nach den Ansprüchen 1 bis 3, dadurch gekennzeichnet, daß man zunächst mit der Teilmenge von 75 bis 90 Gewichtsprozent des Polyestervorkondensats die Kondensation beginnt.

5. Verfahren nach den Ansprüchen 1 bis 4, dadurch gekennzeichnet, daß man Polyestervorkondensate, die wenigstens 50 Molprozent Polybutylenterephthalat-Einheiten enthalten, verwendet.

6. Verfahren nach den Ansprüchen 1 bis 5, dadurch gekennzeichnet, daß man von Polyestervorkondensaten ausgeht, die 70 bis 100 Molprozent Polybutylenterephthalat-Einheiten enthalten.

## Claims

1. A process for the preparation of high molecular weight linear saturated polyesters derived from

4

dicarboxylic acids or their ester-forming derivatives and aliphatic and/or cycloaliphatic diols, by condensing polyester precondensates having a relative viscosity of from 1.05 to 1.15 at from 220 to 280°C under reduced pressure, polyester melts of different degrees of condensation being mixed, characterized in that

a) the condensation is first started with from 70 to 95 per cent by weight of the polyester precondensate and

b) after from 10 to 50% of the total condensation time of the polyester melt undergoing condensation in accordance with a) the remaining 5 to 30 per cent by weight of the polyester precondensate are added to the polyester melt undergoing condensation, and the condensation is taken to completion.

2. A process as claimed in claim 1, characterized in that the polyester melt undergoing condensation has a relative viscosity of from 1.25 to 1.53 at the time of addition of the remaining proportion of polyester precondensate.

3. A process as claimed in claims 1 and 2, characterized in that the remaining proportion of polyester precondensate is added after from 20 to 35% of the total condensation time.

4. A process as claimed in claims 1 to 3, characterized in that the condensation is started with from 75 to 90 per cent by weight of the polyester precondensate.

5. A process as claimed in claims 1 to 4, characterized in that a polyester precondensate which contains at least 50 mole per cent of polybutylene terephthalate units is used.

6. A process as claimed in claims 1 to 5, characterized in that a polyester precondensate which contains from 70 to 100 mole per cent of polybutylene terephthalate units as used as the starting material.

## Revendications

1. Procédé de préparation de polyesters linéaires saturés à poids moléculaire élevé dérivant d'acides dicarboxyliques ou de leurs dérivés formant des esters, et de diols aliphatiques et/ou cycloaliphatiques, par condensation de polyesters peu condensés d'une viscosité relative comprise entre 1,05 et 1,15, à des températures variant entre 220° et 280°C, sous pression réduite, avec mélange de masses fondues de polyesters présentant des dégrés de condensation différents, ce procédé étant caractérisé par le fait que

a) l'on condense d'abord une quantité partielle du précondensat de polyester égale à 70—95% de son poids total, et

b) après un temps représentant 10 à 50% de la durée de condensation totale de la masse fondue de polyester en cours de condensation (a), on ajoute le reste du précondensat de polyester à ladite masse fondue, soit 5 à 30% en poids, et on parachève la condensation.

2. Procédé selon la revendication 1, dans lequel, au moment de l'addition de la partie restante du précondensat de polyester, la masse fondue de polyester en cours de condensation présente une viscosité relative comprise entre 1,25 et 1,53.

3. Procédé selon l'une des revendications 1 et 2, dans lequel on ajoute la quantité restante du précondensat de polyester après un temps représentant 20 à 35% de la durée de condensation totale.

4. Procédé selon l'une des revendications 1 à 3, dans lequel on condense d'abord une quantité partielle du précondensat de polyester égale à 75—90% en poids.

5. Procédé selon l'une des revendications 1 à 4, dans lequel on utilise des précondensats de polyesters renfermant au moins 50% (moles) d'unités téréphtalate de polybutylène.

6. Procédé selon l'une des revendications 1 à 5, dans lequel on part de précondensats de polyesters contenant 70 à 100% (moles) d'unités téréphtalate de polybutylène.